# EUROPÄISCHE PATENTSCHRIFT

(11) **EP 3 849 826 B1**
(45) Veröffentlichungstag und Bekanntmachung des Hinweises auf die Patenterteilung: **22.03.2023**
(21) Anmeldenummer: 19758353.7
(22) Anmeldetag: 13.08.2019
(51) Int. Cl.: B60C 13/02

(54) **REIFEN MIT SEITENWANDABRIEBSINDIKATOR**
TYRES WITH SIDEWALL WEAR INDICATOR
PNEUMATIQUES AVEC INDICATEUR D'USURE DES FLANCS

(30) Priorität: 12.09.2018 DE 102018215460
(43) Veröffentlichungstag der Anmeldung: 21.07.2021
(73) Patentinhaber: Continental Reifen Deutschland GmbH, 30165 Hannover (DE)
(72) Erfinder: LUTZ, André, 30165 Hannover (DE); KRISTEN, Florian, 30165 Hannover (DE)
(74) Vertreter: Continental Corporation
(86) Internationale Anmeldenummer: PCT/EP2019/071637
(87) Internationale Veröffentlichungsnummer: WO 2020/052883

(56) Entgegenhaltungen:
- EP-A1- 2 014 487
- WO-A1-2016/135606
- DE-U1- 8 023 409
- JP-A- 2013 159 317
- JP-A- 2014 148 263

## Beschreibung

Die Erfindung bezieht sich auf einen Reifen.

Die Erfindung geht aus von einem Reifen, aufweisend einen Laufstreifen und eine Reifenseitenwand. Der Reifen ist um eine Rotationsachse in eine Umlaufrichtung rotierbar und der Reifen weist eine Abriebsindikationsvorrichtung auf.

Die Abriebsindikationsvorrichtung ist an der Reifenseitenwand ausgebildet und die Abriebsindikationsvorrichtung ist zur Indikation eines Materialabriebs der Reifenseitenwand vorgesehen.

Die Abriebsindikationsvorrichtung weist eine erste Erstreckung und zweite Erstreckung auf. Die erste Erstreckung liegt rechtwinklig zu der zweiten Erstreckung und die erste Erstreckung liegt parallel zu der Umlaufrichtung und rechtwinklig zu der Rotationsachse. Die zweite Erstreckung liegt rechtwinklig zu der Umlaufrichtung und rechtwinklig zu der Rotationsachse.

Insbesondere liegt die erste Erstreckung rechtwinklig zu einem Radius eines Kreises dessen Form der Reifen grundsätzlich folgt. Insbesondere liegt die zweite Erstreckung parallel zu einem Radius des Kreises dessen Form der Reifen grundsätzlich folgt.

Die Abriebsindikationsvorrichtung ist als Bestandteil des Reifens ausgebildet.

Die Abriebsindikationsvorrichtung weist mindestens eine Aussparung auf, wobei es sich bei der mindestens einen Aussparung um eine Aussparung oder Vertiefung in der Reifenseitenwand handelt.

Bei dem Reifen kann es sich beispielsweise um ein PKW-Reifen, um ein LKW-Reifen oder um ein Fahrrad-Reifen handeln.

Aus dem Stand der Technik sind Abriebsindikationsvorrichtungen zur Feststellung eines Materialabriebs einer Seitendwand eines Reifens bekannt:
Abriebsvorrichtungen für Reifen sind beispielsweise aus der JP 2014148263, aus der EP 2 014 487, aus der JP 2013159317, aus der WO 2016135606 oder der DE 80 23 409 U bekannt.

Aus dem Stand der Technik sind dabei auch solche Abriebsindikationsvorrichtungen bekannt, die eine größte Erstreckung entlang der Reifenoberfläche in eine Richtung parallel zu einem Radius des Kreises, dessen Form der Reifen folgt, aufweisen.

Bei diesen Abriebsindikationsvorrichtungen liegt somit eine größere Erstreckung in eine Richtung rechtwinklig zu einer Umlaufrichtung des Reifens als in eine Richtung parallel zu der Umlaufrichtung. Durch diesen Umstand könnte für den Fall, dass der Reifen in einen Kontakt mit einer Fahrbahnbegrenzung gerät eine derartige mechanische Belastung der Abriebsindikationsvorrichtung eintreten, die zu einer Rissbildung an der Abriebsindikationsvorrichtung führen könnte. Bei der Fahrbahnbegrenzung kann es sich beispielsweise um einen Bordstein handeln. Hintergrund ist, dass die Möglichkeit einer mechanischen Beeinflussung und somit Beschädigung der Abriebsindikationsvorrichtung umso größer ist, je größer die Erstreckung der Abriebsindikationsvorrichtung ist, die rechtwinklig zu der Umlaufrichtung liegt.

Eine Beschädigung der Abriebsindikationsvorrichtung könnte zu einer solchen Beschädigung des Reifens führen, die eine Nutzung des Reifens insgesamt beeinträchtigen könnte.

Der Erfindung liegt daher die Aufgabe zugrunde einen Reifen mit einer Abriebsindikationsvorrichtung bereitzustellen, bei dem die Einsatzfähigkeit des Reifens und der Abriebsindikationsvorrichtung sichergestellt ist.

Gelöst wird die erfindungsgemäß gestellte Aufgabe durch einen Reifen nach Anspruch 1.

Durch den erfindungsgemäßen Umstand, wonach die erste Erstreckung größer als die zweite Erstreckung ist, wird eine kleinere Erstreckung und somit eine kleinere Flanke der Abriebsindikationsvorrichtung in eine Richtung parallel zu der Umlaufrichtung ausgerichtet, als in eine Richtung rechtwinklig zu der Umlaufrichtung. Es liegt somit die kleinere Erstreckung rechtwinklig zu der Umlaufrichtung. Folglich wird die Rissanfälligkeit der Abriebsindikationsvorrichtung durch eine geringere Angriffsfläche vermindert und die Einsatzfähigkeit des Reifens und der Abriebsindikationsvorrichtung ist weitestgehend sichergestellt.

Somit wird insgesamt ein verbesserter Reifen bereitgestellt.

Weitere vorteilhafte Ausgestaltungsformen der vorliegenden Erfindung sind Gegenstand der Unteransprüche.

Gemäß einer vorzugsweisen Ausführungsform der Erfindung weist die mindestens eine Aussparung eine Tiefenerstreckung auf, wobei sich die Tiefenerstreckung in eine Richtung parallel zu der ersten Erstreckung ändert und dabei ein Betrag der Tiefenerstreckung entlang der ersten Erstreckung ausgehend von einem Ausgangsbetrag kleiner wird. Dies bedeutet gleichermaßen, dass gemäß dieser Ausführungsform die mindestens eine Aussparung eine Tiefenerstreckung aufweist, wobei sich die Tiefenerstreckung in eine entgegengesetzte Richtung parallel zu der ersten Erstreckung ändert und ein Betrag der Tiefenerstreckung dabei entlang der ersten Erstreckung ausgehend von einem Ausgangsbetrag größer wird. Es handelt sich bei einer Tiefenerstreckung im Sinn der Erfindung um eine Erstreckung die insbesondere rechtwinklig zu einer Oberfläche der Reifenseitenwand und rechtwinklig zu der ersten Erstreckung liegt und rechtwinklig zu der zweiten Erstreckung liegt.

Gemäß einer weiteren vorzugsweisen Ausgestaltungsform der Erfindung weist die mindestens eine Aussparung eine Tiefenerstreckung auf, wobei sich die Tiefenerstreckung in eine Richtung parallel zu der ersten Erstreckung ändert und ein Betrag der
Tiefenerstreckung dabei entlang der ersten Erstreckung ausgehend von einem Ausgangsbetrag zunächst größer und nach einem Erreichen einer maximalen Tiefenerstreckung kleiner wird.

Gemäß einer weiteren vorzugsweisen Ausgestaltungsform der Erfindung weist die mindestens eine Aussparung eine Tiefenerstreckung auf, wobei sich die Tiefenerstreckung in eine Richtung parallel zu der ersten Erstreckung ändert und ein Betrag der Tiefenerstreckung dabei entlang der ersten Erstreckung ausgehend von einem Ausgangsbetrag zunächst kleiner und nach einem Erreichen einer minimalen Tiefenerstreckung größer wird.

Gemäß einer weiteren vorzugsweisen Ausführungsform der Erfindung ändert sich der Betrag der Tiefenerstreckung kontinuierlich oder diskret.

Gemäß einer weiteren vorzugsweisen Ausführungsform der Erfindung ändert sich für den Fall, wonach sich der Betrag der Tiefenerstreckung kontinuierlich ändert, dieser Betrag entsprechend einer Linearfunktion oder einer Dreiecksfunktion. Durch den erfindungsgemäßen Umstand, wonach sich für den Fall, in dem sich der Betrag der Tiefenerstreckung kontinuierlich ändert, dieser Betrag entsprechend einer Linearfunktion oder einer Dreiecksfunktion ändert, wird eine Aussparung geschaffen, deren Ausmaßen sich linear zu dem erfolgten Abrieb ändern. Dies ermöglicht eine einfache und zuverlässige Bewertung der Abriebsindikationsvorrichtung.

Gemäß einer weiteren vorzugsweisen Ausführungsform der Erfindung weist die Abriebsindikationsvorrichtung eine Mehrzahl an Aussparungen in der Reifenseitenwand auf. Jede Aussparung weist dabei eine Tiefenerstreckung auf, wobei sich die Tiefenerstreckungen der Aussparungen in eine Richtung parallel zu der ersten Erstreckung ändern und Beträge der Tiefenerstreckungen dabei entlang der ersten Erstreckung ausgehend von einem Ausgangsbetrag kleiner werden. Die jeweilige Tiefenerstreckung ist dabei im Sinn der Erfindung eine Tiefe, die sich rechtwinklig zu der Oberfläche der Reifenseitenwand erstreckt in den Reifen hineinerstreckt.

Gemäß einer weiteren vorzugsweisen Ausführungsform der Erfindung ändern sich die Tiefenerstreckungen der Aussparungen in eine Richtung parallel zu der ersten Erstreckung und Beträge der Tiefenerstreckungen werden dabei entlang der ersten Erstreckung ausgehend von einem Ausgangsbetrag in diskreten Schritten kleiner oder die Beträge folgen einer Treppenfunktion.

Gemäß einer nächsten vorzugsweisen Ausführungsform der Erfindung weist der Reifen eine Mehrzahl von erfindungsgemäß ausgebildeten Abriebsindikationsvorrichtungen auf.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines erfindungsgemäßen Reifens;
Fig. 2: Eine schematische Darstellung eines erfindungsgemäßen Reifens gemäß einer Ausführungsform;
Fig. 3: Eine schematische Darstellung eines Bereichs einer Seitenwand eines erfindungsgemäßen Reifens gemäß einer Ausführungsform;
Fig. 4: Eine schematische Darstellung eines Bereichs einer Seitenwand eines erfindungsgemäßen Reifens gemäß einer Ausführungsform;
Fig. 5: Eine schematische Darstellung eines Bereichs einer Seitenwand eines erfindungsgemäßen Reifens gemäß einer Ausführungsform;
Fig. 6: Eine schematische Darstellung eines Bereichs einer Seitenwand eines erfindungsgemäßen Reifens gemäß einer Ausführungsform;
Fig. 7: Eine schematische Darstellung eines Bereichs einer Seitenwand eines erfindungsgemäßen Reifens gemäß einer Ausführungsform.

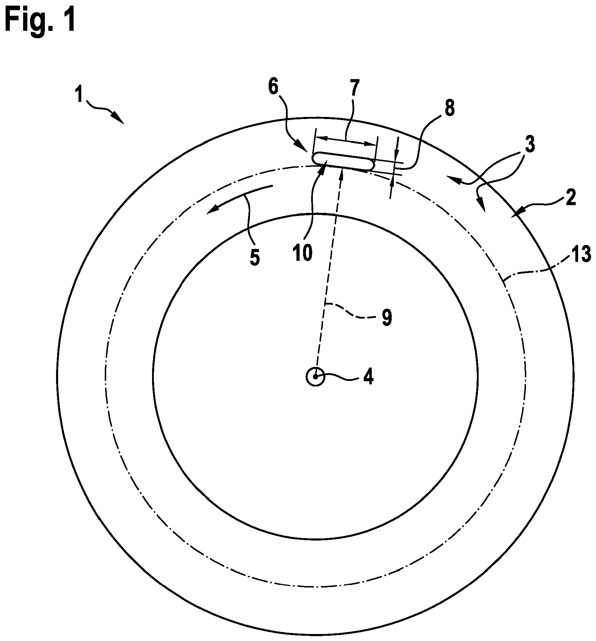

In der Figur 1 ist ein erfindungsgemäßer Reifen 1 schematisch dargestellt. Der Reifen 1 weist einen Laufstreifen 2 und eine Reifenseitenwand 3 auf. Der Reifen 1 ist um eine Rotationsachse 4 in eine Umlaufrichtung 5 rotierbar.

Der Reifen 1 weist eine Abriebsindikationsvorrichtung 6 auf. Die Abriebsindikationsvorrichtung 6 ist an der Reifenseitenwand 3 ausgebildet.

Die Abriebsindikationsvorrichtung 6 ist zu einer Indikation eines Materialabriebs der Reifenseitenwand 3 vorgesehen. Die Abriebsindikationsvorrichtung 6 weist eine erste Erstreckung 7 und zweite Erstreckung 8 auf. Die erste Erstreckung 7 liegt rechtwinklig zu der zweiten Erstreckung 8. Die erste Erstreckung 7 liegt ferner parallel zu der Umlaufrichtung 5 und rechtwinklig zu der Rotationsachse 4.

Die zweite Erstreckung 8 liegt rechtwinklig zu der Umlaufrichtung 5 und rechtwinklig zu der Rotationsachse 4.

Die erste Erstreckung 7 liegt insbesondere rechtwinklig zu einem Radius 9 eines Kreises 13 dessen Form der Reifen 1 grundsätzlich folgt. Insbesondere liegt die zweite Erstreckung 8 parallel zu dem Radius 9 des Kreises 13 dessen Form der Reifen 1 grundsätzlich folgt. Der Kreis 13 wird durch eine Strich-Punkt-Linie dargestellt, der Radius 9 wird durch eine gestrichelte Linie dargestellt.

Die Abriebsindikationsvorrichtung 6 weist mindestens eine Aussparung 10 auf. Bei der mindestens einen Aussparung 10 handelt um eine Aussparung in der Reifenseitenwand 3.

Die erste Erstreckung 7 ist größer als die zweite Erstreckung 8.

Der Reifen 1 ist ein einer Seitenansicht dargestellt. Dies bedeutet, dass die Ansichtsrichtung auf den Reifen 1 parallel oder annähernd parallel zu der Rotationsachse 4 gerichtet ist.

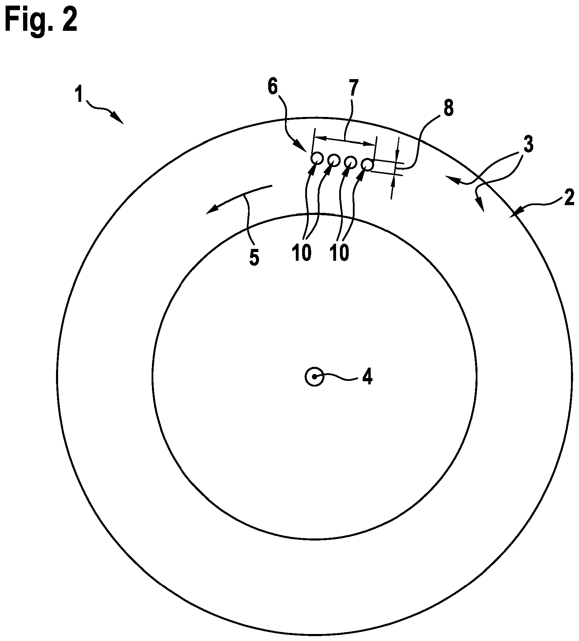

In der Figur 2 ist ein erfindungsgemäßer Reifen 1 gemäß einer Ausführungsform schematisch dargestellt. Gemäß der Darstellung in der Figur 2 weist die Abriebsindikationsvorrichtung 6 vier Aussparungen 10 auf.

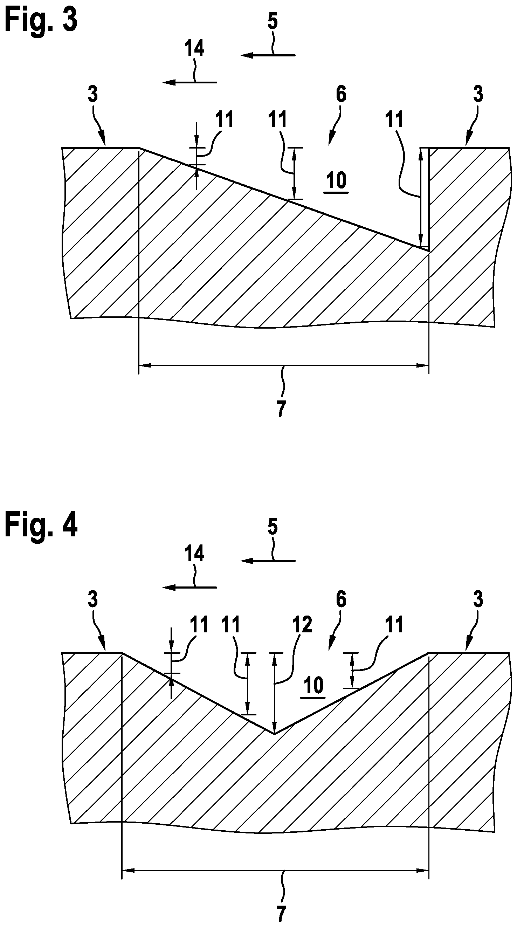

In der Figur 3 ist ein Bereich einer Seitenwand 3 eines erfindungsgemäßen Reifens 1 gemäß einer Ausführungsform schematisch dargestellt. Dargestellt ist die Abriebsindikationsvorrichtung 6 in einer Schnittansicht. Eine Tiefenerstreckung 11 der Aussparung 10 ändert sich, wobei ein Betrag der Tiefenerstreckung 11 in eine Richtung 14 kleiner wird. Die Richtung 14 liegt parallel zu der ersten Erstreckung 7. Die Tiefenerstreckung 11 ändert ihren Betrag entsprechend einer Linear-Funktion.

In der Figur 4 ist ein Bereich einer Seitenwand 3 eines erfindungsgemäßen Reifens 1 gemäß einer weiteren Ausführungsform schematisch dargestellt. Dargestellt ist die Abriebsindikationsvorrichtung 6 in einer Schnittansicht. Gemäß der Darstellung in der Figur 4 ändert sich die Tiefenerstreckung 11 in die Richtung 14 parallel zu der ersten Erstreckung 7, wobei ein Betrag der Tiefenerstreckung 11 dabei entlang der ersten Erstreckung 7 ausgehend von einem Ausgangsbetrag zunächst größer und nach einem Erreichen einer maximalen Tiefenerstreckung 12 kleiner wird.

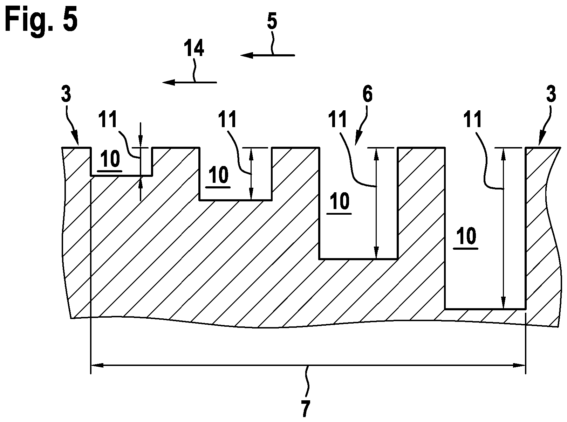

In der Figur 5 ist ein Bereich einer Seitenwand 3 eines erfindungsgemäßen Reifens 1 gemäß einer weiteren Ausführungsform schematisch dargestellt. Dargestellt ist die Abriebsindikationsvorrichtung 6 in einer Schnittansicht. Gemäß der Darstellung in der Figur 5 weist die Abriebsindikationsvorrichtung 6 eine Mehrzahl an Aussparungen 10 in der Reifenseitenwand 3 auf.

Jede Aussparung 10 weist eine Tiefenerstreckung 11 auf, wobei sich die Tiefenerstreckungen 11 der Aussparungen 10 in die Richtung 14 parallel zu der ersten Erstreckung 7 ändern und die Beträge der Tiefenerstreckungen 11 dabei entlang der ersten Erstreckung 7 ausgehend von einem Ausgangsbetrag kleiner werden. Der Betrag jeder Tiefenerstreckung 11 einer Aussparung 10 ist insbesondere konstant in der jeweiligen Aussparung 10.

Die jeweilige Aussparung 10 folgt beispielsweise der Form eines Zylinders mit insbesondere kreisförmigem Querschnitt.

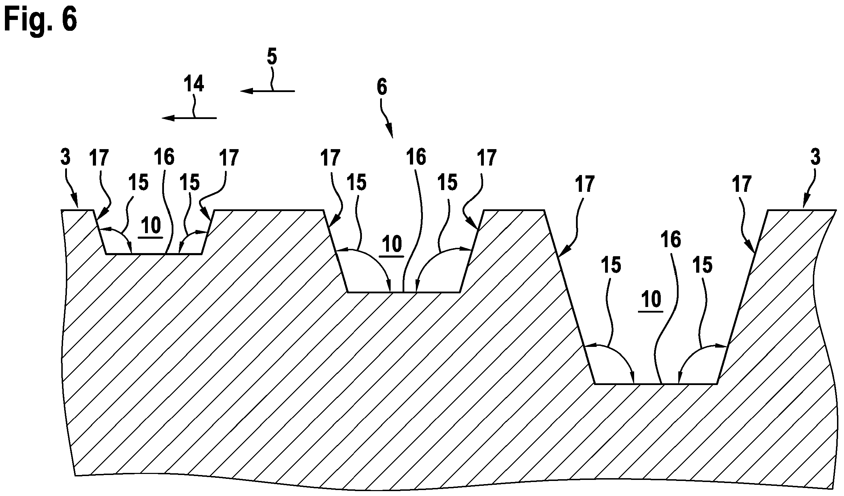

In der Figur 6 ist ein Bereich einer Seitenwand 3 eines erfindungsgemäßen Reifens 1 gemäß einer weiteren Ausführungsform schematisch dargestellt. Dargestellt ist die Abriebsindikationsvorrichtung 6 in einer Schnittansicht. Gemäß der Darstellung in der Figur 6 und im Unterschied zu der in der Figur 5 dargestellten Ausführungsform stehen Seitenbereiche 17 der Aussparungen 10 in jeweils einem Winkel 15 zu einem jeweiligen Aussparungsboden 16 der Aussparung 10, wobei dieser jeweilige Winkel 15 größer als 90° ist. Die jeweilige Aussparung 10 folgt insbesondere der Form eines Kegelstumpfes mit insbesondere kreisförmigem Querschnitt.

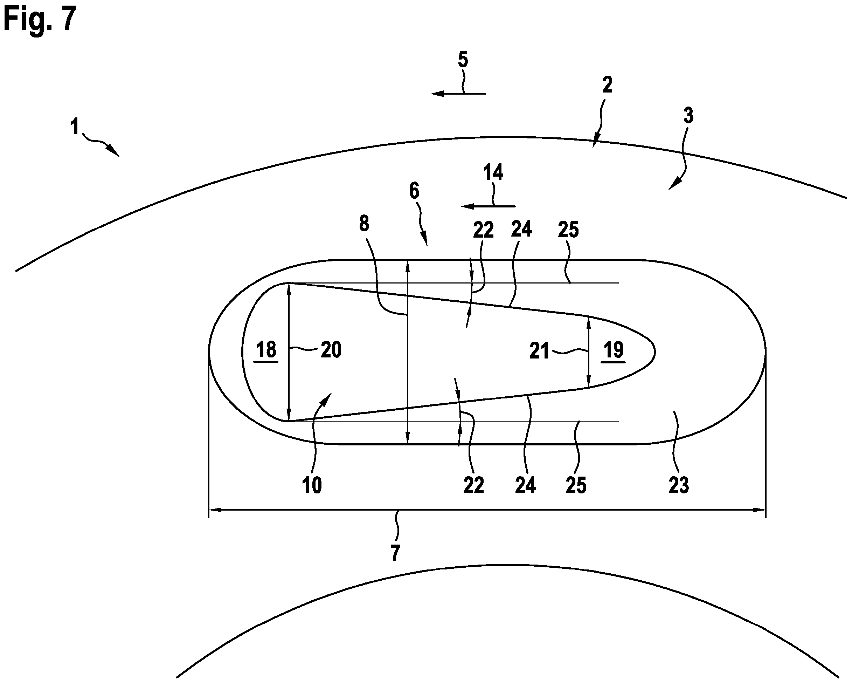

In der Figur 7 ist ein Bereich einer Seitenwand 3 eines erfindungsgemäßen Reifens 1 gemäß einer weiteren Ausführungsform schematisch dargestellt. Gemäß der Darstellung der Figur 7 ist die Aussparung 10 annähernd oval geformt. Die Aussparung 10 weist unterschiedliche Tiefenerstreckungen auf, wobei sich die Tiefenerstreckungen entsprechend der in der Figur 7 dargestellten Ausführungsform in Richtung 14 ändern und die Beträge der Tiefenerstreckungen in Richtung 14 kleiner werden.

In einem Bereich 19 der Aussparung 10 ist der tiefste Bereich der Aussparung 10, das bedeutet, dass hier die größte Tiefenerstreckung vorliegt.

In einem Bereich 18 der Aussparung 10 ist der flachste Bereich der Aussparung 10, das bedeutet, dass hier die kleinste Tiefenerstreckung vorliegt.

Insbesondere ist ein Betrag einer Ausdehnung 20 des flachsten Bereichs18 größer als ein Betrag einer Ausdehnung 21 des tiefsten Bereichs 19.

Die Ausdehnungen 20 und 21 erstrecken sich parallel zu der zweiten Erstreckung 8 und also insbesondere parallel zu dem in dieser Figur nicht dargestellten Radius 9.

Ein Randbereich 23 der Aussparung 10 umrandet die Aussparung 10 derart, dass Seitenwandbereiche 24 der Aussparung 10 zu einer Parallelen 25 der ersten Erstreckung 7 in einem Winkel 22 stehen, wobei jeder Winkel 25 insbesondere einen Wert von 1 ° bis 45° aufweist.

### Bezugszeichenliste

- 1: Reifen
- 2: Laufstreifen
- 3: Reifenseitenwand
- 4: Rotationsachse
- 5: Umlaufrichtung
- 6: Abriebsindikationsvorrichtung
- 7: Erste Erstreckung
- 8: Zweite Erstreckung
- 9: Radius
- 10: Aussparung
- 11: Tiefenerstreckung
- 12: Maximale Tiefenerstreckung
- 13: Kreis dessen Form der Reifen folgt
- 14: Richtung parallel zu der ersten Erstreckung
- 15: Winkel
- 16: Aussparungsboden
- 17: Seitenbereich
- 18: Flachster Bereich
- 19: Tiefster Bereich
- 20: Ausdehnung des flachsten Bereichs
- 21: Ausdehnung des tiefsten Bereichs
- 22: Winkel
- 23: Randbereich der Aussparung
- 24: Seitenwandbereich der Aussparung
- 25: Parallele zu der ersten Erstreckung

## Patentansprüche

1. Reifen (1), aufweisend einen Laufstreifen (2) und eine Reifenseitenwand (3), wobei der Reifen (3) um eine Rotationsachse (4) in eine Umlaufrichtung (5) rotierbar ist, und wobei der Reifen (1) eine Abriebsindikationsvorrichtung (6) aufweist, wobei die Abriebsindikationsvorrichtung (6) an der Reifenseitenwand (3) ausgebildet ist und wobei die Abriebsindikationsvorrichtung (6) zur Indikation eines Materialabriebs der Reifenseitenwand (3) vorgesehen ist, wobei die Abriebsindikationsvorrichtung (6) eine erste Erstreckung (7) und zweite Erstreckung (8) aufweist, wobei die erste Erstreckung (7) rechtwinklig zu der zweiten Erstreckung (8) liegt, wobei die erste Erstreckung (7) parallel zu der Umlaufrichtung (5) liegt und rechtwinklig zu der Rotationsachse (4) liegt und die zweite Erstreckung (8) rechtwinklig zu der Umlaufrichtung (5) liegt und rechtwinklig zu der Rotationsachse (4) liegt, wobei die Abriebsindikationsvorrichtung (6) mindestens eine Aussparung (10) aufweist, wobei es sich bei der mindestens einen Aussparung (10) um eine Aussparung in der Reifenseitenwand (3) handelt, wobei die erste Erstreckung (7) größer als die zweite Erstreckung (8) ist,
**dadurch gekennzeichnet, dass** die mindestens eine Aussparung (10) einen Bereich (19) aufweist, wobei der Bereich (19) der tiefste Bereich der mindestens einen Aussparung (10) ist, und wobei die mindestens eine Aussparung (10) einen weiteren Bereich (18) aufweist, wobei der weitere Bereich (18) der flachste Bereich der mindestens einen Aussparung (10) ist, wobei ein Betrag einer Ausdehnung (20) des flachsten Bereichs (18) größer als ein Betrag einer Ausdehnung (21) des tiefsten Bereichs (19) ist, wobei sich die Ausdehnungen (20, 21) parallel zu der zweiten Erstreckung (8) erstrecken.

2. Reifen (1) nach Anspruch 1, **dadurch gekennzeichnet, dass** die mindestens eine Aussparung (10) eine Tiefenerstreckung (11) aufweist, wobei sich die Tiefenerstreckung (11) in eine Richtung (14) parallel zu der ersten Erstreckung (7) ändert und ein Betrag der Tiefenerstreckung (11) dabei entlang der ersten Erstreckung (7) ausgehend von einem Ausgangsbetrag kleiner wird.

3. Reifen (1) nach Anspruch 1, **dadurch gekennzeichnet, dass** die mindestens eine Aussparung (10) eine Tiefenerstreckung (11, 12) aufweist, wobei sich die Tiefenerstreckung (11) in eine Richtung (14) parallel zu der ersten Erstreckung (7) ändert und ein Betrag der Tiefenerstreckung (11) dabei entlang der ersten Erstreckung (7) ausgehend von einem Ausgangsbetrag zunächst größer und nach einem Erreichen einer maximalen Tiefenerstreckung (12) kleiner wird.

4. Reifen (1) nach Anspruch 2 oder Anspruch 3, **dadurch gekennzeichnet, dass** sich der Betrag der Tiefenerstreckung (11) kontinuierlich oder diskret ändert.

5. Reifen (1) nach dem vorhergehenden Anspruch, **dadurch gekennzeichnet, dass** für den Fall, wonach sich der Betrag der Tiefenerstreckung (11) kontinuierlich ändert, dieser Betrag sich entsprechend einer Linearfunktion oder einer Dreiecksfunktion ändert.

6. Reifen (1) nach einem der vorhergehenden Ansprüche, **dadurch gekennzeichnet, dass** die Abriebsindikationsvorrichtung (6) eine Mehrzahl an Aussparungen (10) in der Reifenseitenwand (3) aufweist, wobei jede Aussparung (10) eine Tiefenerstreckung (11) aufweist, wobei sich die Tiefenerstreckungen (11) der Aussparungen (10) in eine Richtung (14) parallel zu der ersten Erstreckung (7) ändern und Beträge der Tiefenerstreckungen (11) dabei entlang der ersten Erstreckung (7) ausgehend von einem Ausgangsbetrag kleiner werden.

7. Reifen (1) nach dem vorhergehenden Anspruch, **dadurch gekennzeichnet, dass** sich die Tiefenerstreckungen (11) der Aussparungen (10) in eine Richtung (14) parallel zu der ersten Erstreckung (7) ändern und Beträge der Tiefenerstreckungen (11) dabei entlang der ersten Erstreckung (7) ausgehend von einem Ausgangsbetrag in diskreten Schritten kleiner werden oder die Beträge einer Treppenfunktion folgen.

## Claims

1. Tyre (1), having a tread (2) and a tyre sidewall (3), wherein the tyre (3) is rotatable in a circumferential direction (5) about an axis of rotation (4), and wherein the tyre (1) has a wear indicating device (6), wherein the wear indicating device (6) is formed on the tyre sidewall (3) and wherein the wear indicating device (6) is provided to indicate material wear of the tyre sidewall (3), wherein the wear indicating device (6) has a first extent (7) and a second extent (8), wherein the first extent (7) is perpendicular to the second extent (8), wherein the first extent (7) is parallel to the circumferential direction (5) and is perpendicular to the axis of rotation (4), and the second extent (8) is perpendicular to the circumferential direction (5) and is perpendicular to the axis of rotation (4), wherein the wear indicating device (6) has at least one recess (10), wherein the at least one recess (10) is a recess in the tyre sidewall (3), wherein the first extent (7) is greater than the second extent (8),
**characterized in that** the at least one recess (10) has a region (19), wherein the region (19) is the deepest region of the at least one recess (10), and wherein the at least one recess (10) has a further region (18), wherein the further region (18) is the shallowest region of the at least one recess (10), wherein an amount of an extent (20) of the shallowest region (18) is greater than an amount of an extent (21) of the deepest region (19), wherein the extents (20, 21) extend parallel to the second extent (8).

2. Tyre (1) according to Claim 1, **characterized in that** the at least one recess (10) has a depth extent (11), wherein the depth extent (11) changes in a direction (14) parallel to the first extent (7) and, starting from an initial amount, an amount of the depth extent (11) becomes smaller along the first extent (7)

3. Tyre (1) according to Claim 1, **characterized in that** the at least one recess (10) has a depth extent (11, 12), wherein the depth extent (11) changes in a direction (14) parallel to the first extent (7) and, starting from an initial amount, an amount of the depth extent (11) initially becomes greater along the first extent (7) and, after reaching a maximum depth extent (12), becomes smaller.

4. Tyre (1) according to Claim 2 or Claim 3, **characterized in that** the amount of the depth extent (11) changes continuously or discretely.

5. Tyre (1) according to the preceding claim, **characterized in that** for the case in which the amount of the depth extent (11) changes continuously, this amount changes in accordance with a linear function or a triangular function.

6. Tyre (1) according to one of the preceding claims, **characterized in that** the wear indicating device (6) has a plurality of recesses (10) in the tyre sidewall (3), wherein each recess (10) has a depth extent (11), wherein the depth extents (11) of the recesses (10) change in a direction (14) parallel to the first extent (7), and, starting from an initial amount, amounts of the depth extents (11) become smaller along the first extent (7).

7. Tyre (1) according to the preceding claim, **characterized in that** the depth extents (11) of the recesses (10) change in a direction (14) parallel to the first extent (7) and, starting from an initial amount, amounts of the depth extents (11) become smaller along the first extent (7) in discrete steps or the amounts follow a staircase function.

## Revendications

1. Pneumatique (1), présentant une bande de roulement (2) et un flanc de pneumatique (3), le pneumatique (3) pouvant tourner autour d'un axe de rotation (4) dans une direction circonférentielle (5), et le pneumatique (1) présentant un dispositif d'indication d'usure (6), le dispositif d'indication d'usure (6) étant formé sur le flanc de pneumatique (3) et le dispositif d'indication d'usure (6) étant prévu pour l'indication d'une usure de matériau du flanc de pneumatique (3), le dispositif d'indication d'usure (6) présentant une première étendue (7) et une deuxième étendue (8), la première étendue (7) étant perpendiculaire à la deuxième étendue (8), la première étendue (7) étant parallèle à la direction circonférentielle (5) et étant perpendiculaire à l'axe de rotation (4) et la deuxième étendue (8) étant perpendiculaire à la direction circonférentielle (5) et étant perpendiculaire à l'axe de rotation (4), le dispositif d'indication d'usure (6) présentant au moins un évidement (10), l'au moins un évidement (10) étant un évidement dans le flanc de pneumatique (3), la première étendue (7) étant supérieure à la deuxième étendue (8),
**caractérisé en ce que** l'au moins un évidement (10) présente une région (19), la région (19) étant la région la plus profonde de l'au moins un évidement (10), et l'au moins un évidement (10) présentant une autre région (18), l'autre région (18) étant la région la plus plate de l'au moins un évidement (10), une valeur d'une dimension (20) de la région la plus plate (18) étant supérieure à une valeur d'une dimension (21) de la région la plus profonde (19), les dimensions (20, 21) s'étendant parallèlement à la deuxième étendue (8).

2. Pneumatique (1) selon la revendication 1, **caractérisé en ce que** l'au moins un évidement (10) présente une étendue en profondeur (11), l'étendue en profondeur (11) variant dans une direction (14) parallèle à la première étendue (7) et une valeur de l'étendue en profondeur (11) diminuant en l'occurrence le long de la première étendue (7) à partir d'une valeur de départ.

3. Pneumatique (1) selon la revendication 1, **caractérisé en ce que** l'au moins un évidement (10) présente une étendue en profondeur (11, 12), l'étendue en profondeur (11) variant dans une direction (14) parallèle à la première étendue (7) et une valeur de l'étendue en profondeur (11) augmentant en l'occurrence tout d'abord le long de la première étendue (7) à partir d'une valeur de départ et diminuant après avoir atteint une étendue en profondeur (12) maximale.

4. Pneumatique (1) selon la revendication 2 ou la revendication 3, **caractérisé en ce que** la valeur de l'étendue en profondeur (11) varie de manière continue ou de manière discrète.

5. Pneumatique (1) selon la revendication précédente, **caractérisé en ce que** dans le cas où la valeur de l'étendue en profondeur (11) varie de manière continue, cette valeur varie conformément à une fonction linéaire ou à une fonction triangulaire.

6. Pneumatique (1) selon l'une des revendications précédentes, **caractérisé en ce que** le dispositif d'indication d'usure (6) présente une pluralité d'évidements (10) dans le flanc de pneumatique (3), chaque évidement (10) présentant une étendue en profondeur (11), les étendues en profondeur (11) des évidements (10) variant dans une direction (14) parallèle à la première étendue (7) et des valeurs des étendues en profondeur (11) diminuant en l'occurrence le long de la première étendue (7) à partir d'une valeur de départ.

7. Pneumatique (1) selon la revendication précédente, **caractérisé en ce que** les étendues en profondeur (11) des évidements (10) varient dans une direction (14) parallèle à la première étendue (7) et des valeurs des étendues en profondeur (11) diminuent en l'occurrence par pas discrets le long de la première étendue (7) à partir d'une valeur de départ ou les valeurs suivent une fonction en escalier.
